# EUROPEAN PATENT APPLICATION

(11) **EP 1 865 441 A1**
(43) Date of publication of application: **12.12.2007**
(21) Application number: 06722187.9
(22) Date of filing: 29.03.2006
(51) Int. Cl.: G06K 9/00

(54) **SELF-OWNED RESOURCES INTERACTIVE METHOD AND PROCESSING METHOD OF ELECTRONIC TRADE INFORMATION AND SYSTEM**

(30) Priority: 31.03.2005 CN 200510065476; 23.03.2006 CN 200610065673
(71) Applicant: Alibaba.com Corporation, Grand Cayman (KY)
(72) Inventor: SUN, Tongyu 6/F, Chuangye Mansion, Hangzhou Zhejiang 310000 (CN); JIANG, Peng 6/F, Chuangye Mansion, Hangzhou Zhejiang 310000 (CN)
(74) Representative: Grünecker, Kinkeldey, Stockmair & Schwanhäusser Anwaltssozietät
(86) International application number: PCT/CN2006/000535
(87) International publication number: WO 2006/102841

(57) **Abstract**

The present invention relates to the field of network resources data processing, and provides an interactive method of owned-resources. The method uses a management system to record interactive information of the owned-resources, receive the first user's resources and send the resources of a first user to a second user upon verifying that the first user has received the second user's resources. The interactive system of the present invention can automatically improve the completion of the interactive process and automatically promote the flow of steps in the interactive process, and thereby improve the efficiency in data resource interaction and efficiency in electronic trading; make-full use of network resources, and facilitate the operation of data resource interaction. The method helps reduce interaction costs substantially, ensure the smooth progress of resource interaction, enhance reallocation of resources, and therefore improves balanced use of the reallocated resources.

## Description

### TECHNICAL FIELD

This invention relates to the field of network resources data processing, particularly method and system of owned-resource interaction between user terminals through network and their applications, such as processing method and management system of electronic trade information.

### BACKGROUND

In an existing networking system, each terminal usually has a certain amount of resources or data referred to as "owned-resources". Examples of owned-resources include the bandwidth of data transmission, the priority level of data transmission, the quality of service (QoS) of data transmission, and any other data of valuable information for another terminal. Under certain circumstances, these resources require reallocation or redistribution. For instance, a first terminal may require certain resources or data of a second terminal, while a second terminal may require certain resources or data of the first one; in order to accomplish reallocation of data and resources of both parties, the system needs an interactive process for exchanging resources and data between the two terminals. For another example, the first terminal may have resources such as transmission bandwidth and transmission priority; after the first terminal completes its operations, these resources may be in an idle condition. Since these resources are owned by the first user and belong to a particular terminal, a situation may arise in which while the resources are in an idle state, the second terminal may have an urgent request for the resources to complete its operations but unable to obtain them for use. Because of the ownership of the resources, resource interaction (i.e., interactive resource exchange) between the first and the second terminals may be needed in order to fully utilize these idle resources and achieve optimized usage balance of the network resources.

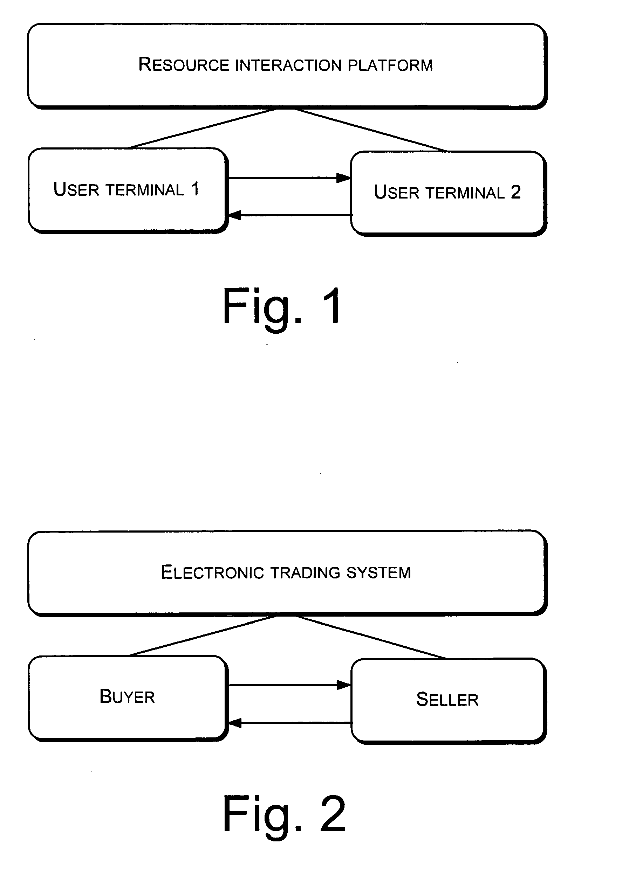

FIG. 1 shows an exemplary embodiment of resource interaction using the existing technologies under the aforementioned conditions. According to FIG. 1, the interaction of the resource data between the first and the second user terminals is accomplished through a resource interaction platform. This interaction platform stores the process information of the resource interaction. The process of the resource interaction is described as follows. The resource interaction platform stores the information of many user terminals and the information of owned-resources used for resource interaction between user terminals; each user terminal searches the required resources through the interaction platform, and upon finding the resources wanted, starts resource interaction with a user terminal that owns the wanted resources. For example, user terminal 1 and user terminal 2 may engage in interaction of owned-resources. The interaction platform records the process information of the resource interaction taking place between user terminal 1 and user terminal 2.

The above-described interactive platform can promote a user terminal's knowledge of the other terminals' owned-resources. However, this type of a resource interaction method has certain problems. Since resource interaction happens between the first and the second user terminals, the interaction platform only records the process information but cannot control the process of the actual data interaction. Moreover, as data interaction occurs simultaneously in both directions, the above-described method cannot ensure the completion of the data interaction process. For example, one user terminal may fail to send out its resource data and hence leave the reciprocal interaction process incomplete. As the volume of owned-resource interaction increases with time, there is an urgent need for a data processing method that can ensure the completion of the resource interaction process.

FIG. 2 illustrates an exemplary practical application of the resource interaction method shown in FIG. 1. The example is an electronic trading method. The electronic trading system includes a user subsystem that stores user identity information, a trade subsystem that stores the information of the trade progress, and a display subsystem that displays the product (goods) information. Buyer's fund and seller's goods are their respective owned-resources in this particular example. The data of trade information is directly communicated between the buyer and the seller. A bank could be involved when receiving the fund but does not participate in the actual trading process. The actual electronic trade is completed through a point-to-point connection between a user and a merchant. For example, a typical electronic trade between a buyer and a seller is made over the network, while the trade information is recorded in the trade system. The buyer subsequently sends the payment to the seller by other means such as bank draft. The seller then sends the goods after receiving the payment. Alternatively, the seller can first send the goods to the buyer and let the buyer send the payment to the seller later.

Since the above method involves much communication between both trading parties and many trade procedures (such as payment method and shipping method), it may require a third party to complete the trade. For this reason, existing electronic trading systems are used only for displaying information of the goods. Although such use may help the understanding of the trade information by both parties, it does not actually facilitate the completion of a trade, making the trade efficiency low.

In addition, the above-described trade method is unable to ensure the safety and integrity of the trade. Data interaction is two-way in nature. As one party cannot ensure the trading behavior of the other, a situation may arise in which one party does not send the trade item and thus fails to complete the electronic trade. This affects the safety of the electronic trade. To address this problem, some electronic trading systems require a credibility profile for merchants to indirectly safeguard the trades. For instance, in a C2C trade platform, parties may leave feedback scores to each other as a means to accumulate a credit history. A credibility profile, however, only represents a past. A good credibility profile may only indicate a possibly high degree of safety for a trade with that merchant, but it cannot ensure the safety of the current trade. Furthermore, this type of electronic trading systems offer no further help to complete a trade, thus the trade efficiency is still low.

In summary, in the existing resource interaction methods, the data is exchanged directly between the parties, resulting in such deficiencies as low efficiency and low level of safety for resource interaction. With an existing process, the trade system cannot participate in the management and handling of the trade information. Trading parties also need to perform a great deal of off-line work to complete a trade. The existing methods do not ensure smooth and safe completion of a network trade, and further do not fully explore the advantages of fast, easy and low-cost network trading.

### SUMMARY OF THE INVENTION

Based on the above background, this invention aims to provide a system and a method that can automatically, conveniently and safely handle the interaction of data and resources between user terminals, thus promoting optimally balanced use of resources.

This invention also aims to apply the above technological concept into electronic trading and provide an automatic electronic trading process, a convenient and safe method for processing electronic trading information, as well as an information management system for electronic trading.

This invention provides solutions to the above-discussed technical problems through the following technical aspects.

One aspect of the invention is a method for owned-resource interaction. The method uses a management system to record the information of resource interaction. The management system first receives a first user's resource. After verifying that the first user terminal has received a second user's resource, the management system sends the first user's resource to the second user's terminal.

Optimally, after receiving the first user's resource, the management system notifies the second user terminal. After receiving a shipping notice from the second user, the management system then notifies the first user terminal. Optimally, the owned-resources can include funds for payment and goods; and the payment is managed by an intermediary credit account.

Another aspect of the invention is a system for owned-resource interaction. The system has the following:
a first user terminal for sending out the first user's owned-resource and sending out a confirmation of receipt of a second user's owned-resource;
a second user terminal sends out the second user's owned-resource; and
a management system for recording information of resource interaction, receiving the first user's resource, notifying the first and the second user terminals the interaction process information; and after verifying the information, transferring the first user's resource to the second user terminal.

Another aspect of the invention is a method for processing electronic trade information. The method uses an intermediary credit account. The method comprises the following steps:
recording trade information;
receiving at the intermediary credit account in management system a payment from a first user;
sending by the management system a notice of receipt of the payment to a second user; and
after confirming the receipt of the second user's goods by the first user, the management system transferring the payment fund from the intermediary credit account into an account of the second user.

Optimally, the above method for processing electronic trade information can also include: after obtaining a notice that the second user has sent out the goods, the management system determines whether a logistics company is assigned; if so, sends a notice to the logistics company to pick up the goods; otherwise, sends the notice to the first user.

Optimally, the method for processing electronic trade information also includes: set up a deadline for payment; determine if the payment has been made by the first user within the deadline; if not, cancel the trade process.

Optimally, the method for processing electronic trade information may also include: before the first user has sent out the payment, receive modification data of the trade information from one of the trading parties and transmitting the modification data to the other trading party.

Optimally, the method for processing electronic trade information also includes: after receiving the shipping notice of the second user, set up a deadline for receiving the goods; determine if a confirmation of receipt of the goods or a cancellation of the trade has been received within the deadline; if not, assume the first user has received the goods from the second user.

Optimally, the method for processing electronic trade information also includes: after confirming of the receipt of the second user's goods by the first user, set up a deadline for fund transfer; determine if a cancellation of trade has been received before the deadline of fund transfer; if so, notify both trading parties; if not, transfer the amount of payment from an intermediary credit account into an account of the second user.

Optimally, the method for processing electronic trade information also includes generating and storing reciprocal rating information of both trading parties.

Another aspect of the invention is a system for managing electronic trade information. The system includes:
a user module for storing information of user identity;
an account module for setting up an intermediary credit account and managing user funds; and
a trading module for storing trade information between users, notifying users the progress of electronic trade, and transferring the payment of the first user to the second user after verifying that the first user has received the second user's goods.

Compared with the existing technology, the present invention has several advantages. The invention introduces a third-party trade management platform that can automatically promote and facilitate the completion of the trade process. The resultant system automatically prompts the trade procedures to move forward and hence improves the efficiency of the resource interaction as well as the efficiency of electronic trade process. The system also fully utilizes the network resources, and facilitates the progress of resource interaction. It can greatly reduce the trading cost and ensure a smooth progress of resource interaction. It facilitates the reallocation of resources to achieve a more balanced use of the reallocated resources. In addition, the invention allows deadlines to be set within the trade process to accelerate the interaction process and hence further increase the processing efficiency.

This invention introduces a third-party resource database. A user terminal can send its resources to the third-party database first. After the user terminal receives another terminal's resources, the third-party database can then send the first user's resources to the latter terminal, thus maintaining the safety and completion of the resource interaction process. This design reduces the cost of resource interaction, facilitates resource redistribution and promotes a more balanced resource use, and reduces idleness and wasting of resources.

By the same token, when applied in an electronic trade process, this invention introduces an intermediary credit fund database and allows making payment before sending the goods to ensure trade safety of the seller. At the same time, since the payment is not made directly to the seller, but rather transferred to the seller only after the buyer confirms the receipt of the goods, the method also ensures a safe trade for the buyer. As such, the electronic trading method described in this invention can ensure the safety and the completion of the interaction process. It reduces the cost of electronic trading and increases the efficiency of the network use, fully exploring the advantages of the efficient, convenient and low-cost internet trade.

### DESCRIPTION OF DRAWINGS

FIG.1 shows an example of how existing technologies accomplish resource interaction.
FIG. 2 shows a practical application of the resource interaction method shown in FIG. 1.
FIG. 3 shows a flowchart of a method for owned-resource interaction in accordance with the present invention.
FIG. 4 shows a structural diagram of a system of owned-resource interaction in accordance with the present invention.
FIG. 5 shows a flowchart of an electronic trade method in accordance with the present invention.
FIG. 6 shows a flowchart of an exemplary embodiment of an electronic trade method in accordance with the present invention.
FIG. 7 shows a structural diagram of an electronic trade processing system in accordance with the present invention.

### DETAILED DESCRIPTION

### Exemplary Embodiments

The core concept of this invention is to employ, in a process of owned-resource interaction, a management system to manage and handle interaction information and automatically control the progress of interaction process based on feedback. This invention also uses a third-party resource database to temporarily store the resources of one party to ensure the safety and completion of interaction process. As such, this invention improves the balanced use of resources and reduces the wasteful idleness of resources.

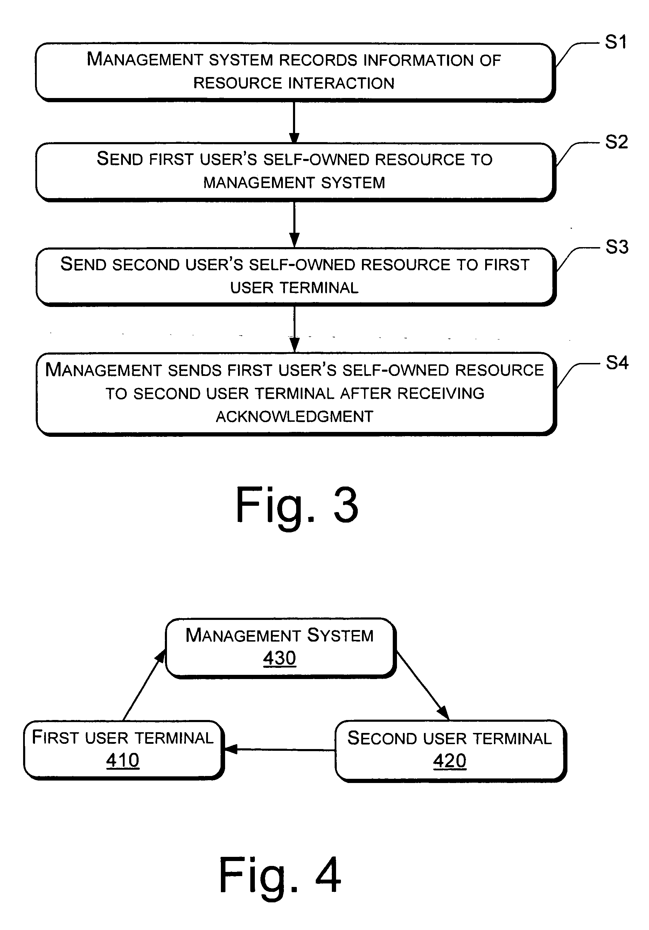

FIG. 3 shows a flowchart of a method of owned-resource interaction in accordance with the present invention.

At Step S1, management system records information of resource interaction.

A user who carries out resource interaction can acquire the information of another user's resources through traditional technologies such as a web page or other information display systems. After establishing the intent of conducting resource interaction, any one of the parties can submit the related information of the resource interaction to the management system. After receiving the submitted information, the management system may create a trade document and store it into a memory device of the management system.

At Step S2, a owned-resource of the first user is sent to the management system.

For example, the first user may send its owned-resource to the management system. The management system acts as a third party and temporarily stores the first user's owned-resource (which is involved in this interactive exchange). The management system may store the resource into its resource database so that it can handle multiple resource interaction processes at the same time to improve resource utilization and handling efficiencies.

At Step S3, a second user sends its owned-resource to the first user.

After the first user sends its owned-resource to the management system, the first user may inform the second user on its own. Alternatively, the management system may notify the second user after receiving the owned-resource of the first user, thus asserting a stronger control to advance the interaction process. After the second user receives the notification, the second user can then send its owned-resource for resource interaction to the first user. In order to assert further control over the interaction process, Step S3 may include the following: the second user notifies the management system that its owned-resource has been sent; and the management system then notify the first user terminal to advance the interaction process to the next step.

At Step S4, the management system sends the first user's resource to the second user terminal upon receiving confirmation.

After the first user receives the second user's resource, the first user sends out a confirmation message to the management system to indicate that the current resource interaction has been confirmed by the first user and may proceed. At this point, since the first user's owned-resource is still stored in a third-party's resource database, the first user may cancel the interaction process any time. This ensures a safe interaction for the first user. On the other hand, since the first user's owned-resource is still stored in the third-party resource database, the first user does not have complete control over the resource. This ensures a safe interaction for the second user. This manner of interaction ensures the safety and completion of the interaction process and promotes redistribution and balanced use of the resources.

After receiving from the first user a confirmation indicating that the interaction process may proceed, the management system then sends the first user's owned-resource to the second user terminal to complete the interaction process. The confirmation of the first user can be an explicit confirmation message sent by the first user, or it can be implicitly assumed after a certain period of time has elapsed. Moreover, the confirmation message can be sent by an entrusted third party rather than directly by the first user.

To help user terminals better search and understand the data and resources used in interaction, the management system may include a display system offered by existing technologies to show the related information of a user terminal's owned-resource.

One exemplary application of the method of owned-resource interaction is to be used in an electronic trading process where the users carry out electronic trades. The owned-resources in this embodiment may include payment funds and goods. The management system can control the trade process to ensure smooth trading, and further manage the payment funds through an intermediary credit fund.

FIG. 4 shows a structural diagram of a system of owned-resource interaction in accordance with the present invention. The system includes first user terminal 410, second user terminal 420 and management system 430. The first and the second user terminals 410 and 420 carry out the resource interaction through the management system 430.

The first user terminal 410 is for sending out the first user's owned-resource and sending out a confirmation of receiving the second user's owned-resource.

The second user terminal 420 is for sending out the second user's owned-resource and notifying the management system 430 that the second user's owned-resource has been sent.

The management system 430 records the information of the resource interaction and receives and stores the first user's owned-resource. It also notifies the first and the second user terminals 410 and 420 of the progress of the interaction process. After receiving the confirmation, the management system 430 sends the first user's owned-resource to the second user terminal 420.

Compared with the existing technologies, one primary difference of the interaction system of the present invention is to include a management system (430) to promote and control the interaction process. The management system 430 also stores the first user's resource to ensure the safety of the interaction.

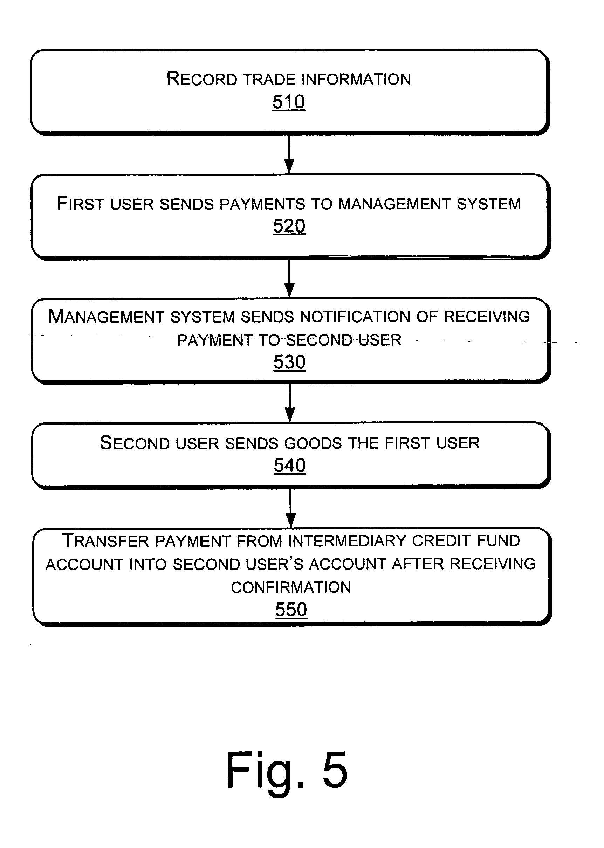

FIG. 5 shows a flowchart of an electronic trading method in accordance with the present invention.

Step 510 is for recording trading information. Any one of the trading parties can send the information of the trade contents, such as the name of the goods to be purchased, quantities and the shipping address, to a server of a management system. After receiving the trading information, the management system can create a trade document and store it into a memory device of the management system.

The management system can also transmit the received trade information to the other party. Assuming two trading parties A and B, after party B logs on to the system, the management system can prompt party B and send the trade information of party A to party B.

Step 520 is for the first user to send a payment to the management system. The first user does not send the payment directly to the second user, but rather to the management system which manages the payment temporarily. The management system may manage the payment through an intermediary credit account.

Step 530 is for the management system to notify the second user that payment has been received. The management system checks with the intermediary credit account. If the intermediary credit account indicates that the first user has funds larger than or equal to that of the required payment, the management system informs the second user that the payment is received.

The intermediary credit account may be included in the management system. Both trading parties may open an account with the intermediary credit account. The first user may then deposit money into the intermediary credit account. After the management system has generated the data of the trade information, the management system may periodically check with the intermediary credit account. Once the amount of the payer's funds in the account is larger than or equal to the trade amount, the management system generates and stores the data of the payment information. When the other trading party (the second user) logs into the system, the management system sends a payment receipt notice to the second user and notifies the second user to send its goods of trade.

At Step 540, the second user sends the goods to the first user.

At Step 550, the management system transfers funds from the intermediary credit account into the second user's account after receiving a confirmation. Specifically, upon receiving the goods, the first user sends out a confirmation to the management system to confirm the receipt of the goods. The management system then generates and stores the delivery information, and transfers the funds from the intermediary credit account into the second user's account based on the information.

If the trading parties go through a logistics company to carry out the trade, the confirmation can be sent by the logistics company. Once the management system receives this confirmation, it generates and stores the delivery information and transfers the funds from the intermediary credit account into the second user's account based on this information. In general, the first user is the buyer and the second user the seller.

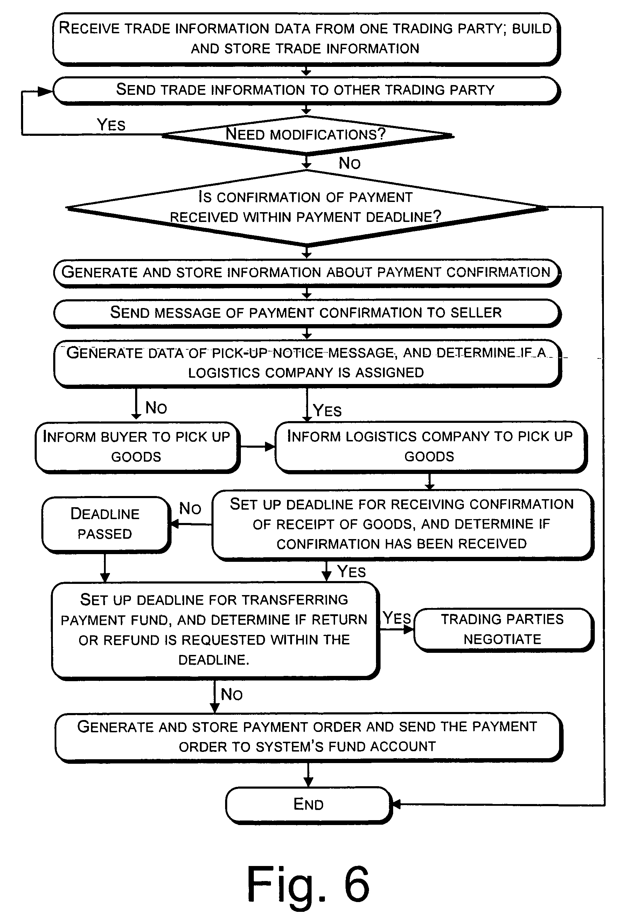

FIG. 6 is the flowchart of an exemplary embodiment of an electronic trading method in accordance with the present invention. Compared with the flowchart in FIG. 5, the example illustrated in FIG. 6 has some additional steps for optimization, as described in the following.

Before Step 550, the embodiment of FIG. 6 lets the second user notify the management system of shipping after the second user sends out the goods. The management system determines if a logistics company is designated. If yes, the management system informs the logistics company to pick up the goods. If not, the management system sends a pickup notice to the first user. The management system makes the determination using the stored information of the trade. If one user has not designated a logistics company, the management system proceeds to determine if the other user has designated one. By introducing a logistics company in the trading process, the management system can further enforce the control over the trade process to increase the trade efficiency.

To further help the user terminals better search and understand the data of resource interactions, the management system can also show the related information of the user terminal's owned-resources using means such as a display system offered by the existing technologies.

A payment deadline can also be set up before Step 520. If the payment of the first user has not been received before the deadline, the trade process may be cancelled. Otherwise, the trade process may be continued. This step helps to optimize the trade process. If the first user has not made the required payment within the deadline, the condition may indicate that the trade has encountered difficulties to complete. The situation may advise terminating the trade process in order to reduce resource waste and improve the efficiency of resource use by the management system.

Optimally, before Step 52, a trading party may be allowed to modify the trade information and send the modification information to the other parties. For example, before the first user sends out the payment, both parties are allowed to make changes to the trade. The modification information can be sent by the management system to the other party so that both parties can negotiate and change the trade details such as quantities and prices. The above example is only an exemplary implementation. The step of modifying trade information can also be performed at other places of the trade process.

The embodiment of FIG. 6 may also include setting up a deadline for receiving the goods after receiving the second user's notification that the good has been sent. The system may determine whether a confirmation or cancellation of the trade from the first user has been received within the deadline. If not, it may be assumed that a confirmation has been received from the first user. This arrangement may be helpful in a situation in which the first user does not send out confirmation after having received the goods for a longtime. Setting a deadline helps better control the progress of the trade process and ensures the safety of the trade.

Moreover, the embodiment of FIG. 6 also includes setting a deadline for transferring funds after receiving the confirmation from the first user; and determining whether a trade cancellation has been received from the first user before the deadline for transferring funds. If a cancellation request has been received, the system sends a message to both parties to prompt action. If not, the system transfers the payment from the intermediary credit account into the second user's account. For instance, the management system may determine whether it has received a notice of the buyer's request for return or refund. If not, the trade process continues. However, if such a notice has been received, the management system may help communicate the information of return negotiation between the buyer and the seller. Based on the final result of the negotiation, the management system directs the intermediary credit account to pay the agreed amount to the seller and refund the rest to the buyer.

The electronic trading method in accordance with the present invention can also receive and store the information of reciprocal evaluations of the trading parties. Moreover, the management system can develop its own evaluation data for each trading party. For example, during the trade process, the management system may give a low score for a party that does not perform its duties within the preset deadlines. A party that does not provide enough funds to its account with the deadline and a party that does not send out a confirmation within the deadline may also be scored accordingly.

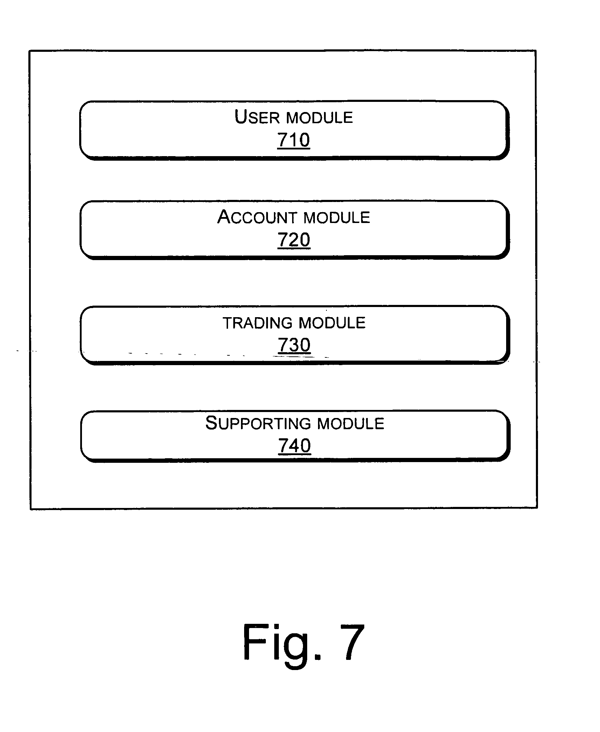

FIG. 7 shows a structural diagram of an electronic trade processing system in accordance with the present invention. The system includes the following components:
User module 710: used for storing user information such as Email, contact method, identity information and passwords. The primary function of user module 710 is to label the user identification.
Account module 720: used for establishing an intermediary credit account, storing fund statuses of users such as the current balance and the deposit/withdrawal history.
Trading module 730: used for storing user trade information such as date of trade, place of trade, goods purchased, trade price, buyer information, seller information, and overall trade status as well as trade progress. Trading module 730 is also used to implement preset procedures and control trade process based on feedback information. For example, when a certain deadline has passed or explicit confirmation of successful delivery is received, trading module 730 may inform account module 720 to transfer the payment from the intermediary credit account to the second user's account.
The processing system of FIG. 7 is mainly made up of the above three modules that form a complete trade model from user to account and from account to trade. A processing system in practice may also include some auxiliary parts such as client management, network trade tools and business tools, as denoted by supporting module 740.
The owned-resource interaction method and system and the electronic trading information handling method have been described in detail above. This description uses examples to illustrate the principles and various embodiments of this invention. However, the examples are used only to assist the understanding of the core concept of the invention. Many variations of the invention will become apparent to those of skill in the art upon review of this disclosure, and those variations still remain within scope of this invention. The scope of the invention should, therefore, be determined not with reference to the above description, but instead should be determined with reference to the appended claims along with their full scope of equivalents.

## Claims

1. A method of owned-resource interaction, the method comprising:
recording resource interaction information by a management system;
receiving at the management system a first user's owned-resource; and
sending by the management system the first user's owned-resource to a second user terminal after verifying receipt of a second user's owned-resource by a first user terminal.

2. The method of owned-resource interaction as recited in claim 1, further comprising:
informing the second user terminal by the management system after receiving the first user's owned-resources; and
informing the first user terminal by the management system after the receiving a notice that the second user's owned-resource has been sent out.

3. The method of owned-resource interaction as recited in claim 1 or 2, wherein the owned-resources include one or more of a payment fund and goods, and wherein the payment fund is managed by an intermediary credit account.

4. A system of owned-resource interaction, the system comprising:
a first user terminal for sending out a first user's owned-resource and sending out a confirmation of receipt of a second user's owned-resource;
a second user terminal for sending out a second user's owned-resource; and
a management system for recording information of resource interaction, receiving the first user's owned-resource, notifying the first user and the second user the information of resource interaction, and transferring the first user's owned-resource to the second user terminal after receiving the confirmation.

5. A method for processing electronic trading information, the method being **characterized by** setting up an intermediary credit account, and comprising:
recording trade information;
receiving at the intermediary credit account by a management system a payment fund sent from a first user; and
transferring by the management system the payment fund from the intermediary credit account to a second user's account after receiving a confirmation of receipt of goods of a second user by the first user.

6. The method for processing electronic trading information as recited in claim 5, further comprising:
determining whether a logistics company is assigned after the management system receives a shipping notice indicating that the second user has shipped the goods; and
sending a pick-up notice to the logistics company if assigned, or sending the pick-up notice to the first user if no logistics company is assigned.

7. The method for processing electronic trading information as recited in claim 5, further comprising:
setting up a payment deadline;
determining whether the payment fund has been received from the first user within the payment deadline; and
cancelling trade process if payment fund has not been received.

8. The method for processing electronic trading information as recited in claim 5, further comprising:
receiving a modification of trade information from one of the first user and the second user; and
sending the modification to the other user before the first user has made a payment.

9. The method for processing electronic trading information as recited in claim 6, further comprising:
setting up a deadline for receiving goods after receiving the shipping notice;
determining whether the confirmation of receipt of the goods or a message of cancellation of trade has been received within the deadline; and
establishing that the first user has received the goods of the second user if confirmation is received or no cancellation message is received within the deadline.

10. The method for processing electronic trading information as recited in claim 5 or 9, further comprising:
setting up a deadline for fund transfer after confirming the first user has received the goods of the second user;
determining if a trade cancellation message is received within the deadline; and
sending a prompt message to the first user and the second user if cancellation message is received, or transferring the payment fund from the intermediary credit account into the second user's account if no cancellation message is received.

11. The method for processing electronic trading information as recited in claim 5, further comprising:
generating and storing reciprocal rating data of the first user and the second user.

12. A processing system of electronic trading information, comprising:
a user module for storing information of user identities;
an account module for establishing an intermediary credit account and managing user funds;
a trading module for storing trade information, notifying the users information of the electronic trading status, and transferring payment fund of a first user to a second user after confirming receipt of goods by the first user.
